(19) Europäisches Patentamt
European Patent Office
Office européen des brevets

(11) Numéro de publication : **0 434 579 B1**

# (12) FASCICULE DE BREVET EUROPEEN

(45) Date de publication du fascicule du brevet : **09.03.94 Bulletin 94/10**

(51) Int. Cl.[5] : **C08L 83/04,** // C09J7/04, C03C25/02

(21) Numéro de dépôt : **90420548.1**

(22) Date de dépôt : **14.12.90**

(54) **Compositions durcissables sous U.V., utilisables notamment dans le domaine de l'antiadhérence papier et des fibres optiques.**

(30) Priorité : **19.12.89 FR 8917153**

(43) Date de publication de la demande : **26.06.91 Bulletin 91/26**

(45) Mention de la délivrance du brevet : **09.03.94 Bulletin 94/10**

(84) Etats contractants désignés : **AT BE CH DE DK ES FR GB GR IT LI LU NL SE**

(56) Documents cités :
**EP-A- 0 169 295**
**EP-A- 0 283 008**
**EP-A- 0 336 633**
**FR-A- 1 556 008**
**FR-A- 2 110 115**
**FR-A- 2 192 137**
**FR-A- 2 447 386**
**US-A- 4 797 445**

(73) Titulaire : **RHONE POULENC CHIMIE**
**25 Quai Paul Doumer**
**F-92408 Courbevoie Cédex (FR)**

(72) Inventeur : **Bouvy, Bernard**
**12, rue des Cerisiers**
**F-69100 Tassin-la-Demi-Lune (FR)**
Inventeur : **Cavezzan, Jacques, Résidence du Parc Tête d'Or**
**4, Allée Marcel Achard**
**F-69100 Villeurbanne (FR)**

(74) Mandataire : **Trolliet, Maurice et al**
**RHONE-POULENC CHIMIE Direction de la Propriété Industrielle Centre de Recherches des Carrières B.P. 62**
**F-69192 Saint-Fons Cédex (FR)**

EP 0 434 579 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions durcissables par un rayonnement (photopolymérisables) et permettent par dépôt sur un substrat, puis durcissement sur ce substrat, d'obtenir un article ayant des propriétés antiadhérentes vis-à-vis par exemple de denrées alimentaires ou plus spécialement d'adhésifs acryliques mis au contact de cet article. Les compositions selon la présente invention sont particulièrement intéressantes dans le domaine de l'antiadhérence papier, ainsi que pour la protection de circuits imprimés en électronique et pour le gainage de fibres optiques.

Des compositions photopolymérisables sont connues notamment par la demande de brevet français 2 447 386, mais de telles compositions, même utilisées en couches minces, c'est-à-dire par exemple à raison de 2 g/$m^2$ sur du papier, exigent des temps de réticulation, sous rayonnement U.V., généralement supérieurs à une seconde.

Un but de la présente invention est donc l'obtention de compositions photoréticulables durcissant plus rapidement tout en conduisant à des élastomères ayant de très bonnes propriétés mécaniques, notamment en ce qui concerne l'allongement à la rupture, le module de YOUNG et la dureté SHORE.

Un autre but de la présente invention est l'obtention de compositions pouvant être utilisées en couches épaisses, par exemple d'épaisseur supérieure à 2 mm, et réticulant rapidement.

Il a maintenant été trouvé, et c'est ce qui fait l'objet de la présente invention, des compositions polyorganosiloxanes photopolymérisables comprenant :

A. - le produit de la reaction entre :

a) - une huile polydiorganosiloxane α,ω-dihydroxylée,
b) - une résine polysiloxane hydroxylée,
c) - au moins un silane de formule $Z\text{-}G\text{-}Si(R_a)Q_{3-a}$ dans laquelle:
- le symbole Z représente le radical CHX = C(R')-COO-, ou le radical -SH,
- les symboles R, identiques ou différents, représentent des radicaux alcoyles en $C_1$ à $C_4$, alcényles en $C_2$ à $C_4$, aryles,
- le symbole R' représente un atome d'hydrogène ou un radical méthyle,
- le symbole X représente un atome d'hydrogène ou un radical phényle, éventuellement halogéné,
- le symbole G représente un radical alcoylène, linéaire ou ramifié, ayant de 1 à 8 atomes de carbone,
- les symboles Q, identiques ou différents, représentent des radicaux alcoxy en $C_1$ à $C_8$, des radicaux β-méthoxyéthoxyles, deux symboles Q en se réunissant représentant un radical de formule:

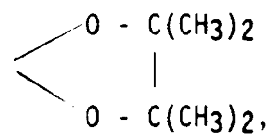

- a représente 0, 1 ou 2

en présence

d) - d'au moins un catalyseur de condensation, la réaction ayant lieu à une température comprise entre 5 et 180°C et le rapport molaire de la somme des radicaux hydroxyles de a) et b) divisée par les radicaux Q du silane c) étant compris entre 0,1 et 0,95.

B. - au moins un photo-initiateur.

Les compositions selon la présente invention peuvent être utilisées sans solvant.

L'huile polydiorganosiloxane α,ω-dihydroxylée a) préférablement utilisée est une huile ou un mélange d'huiles dont la viscosité à 25°C est comprise entre 50 et 100 000 mPa.s, de préférence entre 60 et 20 000 mPa.s. Lorsque les compositions selon la présente invention comprennent un mélange d'huiles, l'une d'entre elles peut avoir une viscosité supérieure à 100 000 mPa.s, mais la viscosité du mélange d'huiles ne dépasse pas 100 000 mPa.s.

Ces huiles a) sont des polymères linéaires constitués essentiellement de motifs diorganosiloxyles de formule $Y_2SiO$ et bloqués à chaque extrémité de leur chaîne par un radical hydroxyle lié à l'atome de silicium. Toutefois la présence de motifs monoorganosiloxyles de formule $YSiO_{1,5}$ et/ou de motifs $SiO_2$ n'est pas exclue dans la proportion d'au plus 1% par rapport au nombre de motifs diorganosiloxyles.

Les symboles Y, identiques ou différents, représentent des radicaux alcoyles en $C_1$ à $C_6$, éventuellement halogénés, alcényles en $C_2$ à $C_4$, aryles éventuellement substitués en $C_6$ à $C_8$, cycloalcoyles en $C_4$ à $C_6$.

Les symboles Y représentent le plus généralement des radicaux méthyles, éthyles, n-propyles, vinyles, phényles, trifluoro-3,3,3 propyles.

A titre illustratif de motifs représentés par la formule $Y_2SiO$ peuvent être cités ceux répondant aux formules suivantes :

$$(CH_3)_2SiO\ ,\ CH_3(CH_2 = CH)SiO\ ,\ CH_3(C_2H_5)SiO\ ,\ CH_3(n - C_3H_7)SiO\ ,\ CH_3(CF_3 - CH_2 - CH_2)SiO\ ,$$
$$CH_3(C_6H_5)SiO\ ,\ (C_6H_5)_2SiO.$$

Dans ces huiles 70% au moins des symboles Y représentent des radicaux méthyles et 3% au plus représentent des radicaux vinyles.

La résine polysiloxane hydroxylée (b) préférablement utilisée est une résine liquide comprenant, en poids, de 0,1 à 6% de groupements hydroxyles. Sa viscosité, mesurée à 25°C, est comprise entre 50 et 30 000 mPa.s, de préférence entre 60 et 20 000 mPa.s. Cette résine comprend des motifs $R^2SiO_{1,5}$ (appelées T) et/ou $SiO_2$ (Q) en association avec des motifs $R^2{}_3SiO_{0,5}$ (M) et/ou des motifs $R^2{}_2SiO$ (D).

Le symbole $R^2$ représente des radicaux alcoyles en $C_1$ à $C_6$, linéaires ou ramifiés, éventuellement halogénés, des radicaux aryles, des radicaux alcényles en $C_2$ à $C_4$. De façon générale au moins 70%, de préférence au moins 75% des symboles $R^2$ représentent des radicaux méthyles.

Ces résines sont commercialisées par les fabricants de silicones. Elles peuvent être fabriquées aisément en suivant par exemple la technique de cohydrolyse décrite plus spécialement dans les brevets français FR 1 226 745, FR 1 408 662, FR 2 429 811 et FR 2 521 574.

A titre indicatif on peut préparer selon les brevets cités ci-dessus, des résines contenant soit une pluralité de motifs TD, soit une pluralité de motifs TM, soit une pluralité de motifs TDM, soit une pluralité de motifs QTDM, la signification des symboles Q, T, D et M ayant été précisée ci-avant.

Dans les compositions selon la présente invention pour 100 parties en poids de l'huile $\alpha,\omega$-dihydroxypolydiorganosiloxane a) on utilise de 5 à 50 parties de résine polysiloxane hydroxylée (b).

Les silanes (c) utilisés dans les compositions selon la présente invention ont pour formule $Z - G - Si(Ra)Q_{3-a}$, les significations de Z, G, Q et a ayant été précisées plus avant. Ainsi les silanes b) utilisés répondent:

- soit à la formule dite $F_1$, c'est-à-dire :

$$CHX = CH(R') - COO - G - Si(Ra)Q_{3-a},$$

- soit à la formule dite $F_2$, c'est-à-dire :

$$HS - G - Si(Ra)Q_{3-a}.$$

Plus précisément le symbole G représente un radical alcoylène, ayant de 1 à 8 atomes de carbone, choisi, par exemple, parmi ceux de formules :

$$-(CH_2)_{n-}\ \text{(n = nombre entier allant de 1 à 8);}$$
$$-CH_2CH(CH_3)CH_2-$$
$$-CH_2CH_2CH(CH_3)CH_2-\ ;$$
$$-(CH_2)_4CH(C_2H_5)CH_2-.$$

Comme exemples concrets de silanes de formule $F_1$ peuvent être cités ceux répondant aux formules suivantes :

$$CH_2 = CH\text{-}COOCH_2Si(CH_3)(OCH_3)_2\ ;$$
$$CH_2 = CH\text{-}COO(CH_2)_3Si(OC_2H_5)_3\ ;$$
$$CH_2 = CHCOO(CH_2)_3Si(OCH_3)_3\ ;$$
$$CH_2 = CH\text{-}COO(CH_2)_4Si(OCH_2CH_2OCH_3)_3\ ;$$
$$CH_2 = CH\text{-}COO(CH_2)_3Si(O\ n\text{-}C_3H_7)_3\ ;$$
$$CH_2 = CH\text{-}COOCH_2CH(CH_3)CH_2Si(CH=CH_2)(OCH_3)_2\ ;$$
$$CH_2 = C(CH_3)COOCH_2Si\text{-}CH_3(OCH_3)_2\ ;$$
$$CH_2 = C(CH_3)COO(CH_2)_3Si(OCH_3)_3\ ;$$
$$CH_2 = C(CH_3)COO(CH_2)_3Si(OC_2H_5)_3\ ;$$
$$CH_2 = C(CH_3)COO(CH_2)_3Si(OCH_2CH_2OCH_3)_3\ ;$$
$$CH_2 = C(CH_3)COO(CH_2)_3Si(CH_3)_2OCH_3\ ;$$
$$CH_2 = C(CH_3)COO(CH_2)_4Si(C_6H_5)(OCH_3)_2\ ;$$
$$CH_2 = C(CH_3)COO(CH_2)_4CH(C_2H_5)CH_2Si(C_2H_5)(OCH_3)_2\ ;$$

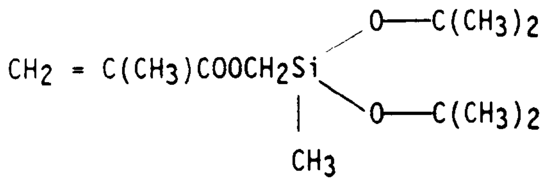

Ces silanes peuvent être préparés par réaction des composés intermédiaires de formule Cl - G-$SiR_a(Q)_{3-a}$ avec les acides organiques de formule CHX = C(R')COOH. La réaction est avantageusement effectuée au sein d'un solvant aprotique tel que la N-méthylpyrrolidone-2, le N,N-diméthylformamide, et en présence d'un accepteur d'HCl tel que la triéthylamine. A la place des acides organiques peuvent être utilisés leurs sels de métaux alcalins; dans ce cas il est inutile d'introduire un accepteur d'HCl dans le mélange réactionnel. Ces silanes peuvent également être achetés sur le marché des silicones.

Comme exemples concrets de silanes de formule $F_2$ peuvent être cités ceux répondant aux formules suivantes :

$HS(CH_2)_3Si(OCH_3)_3$ ;
$HSCH_2SiCH_3(OC_2H_5)_2$ ; $HS(CH_2)_4SiCH_3(OCH_3)_2$ ; $HS(CH_2)_4Si(CH_3)_2OC_2H_5$ ;
$HSCH_2CH(CH_3)CH_2SiCH_3(OC_2H_5)_2$ ; $HS(CH_2)_3SiCH_3(OC_2H_5)_2$ ;
$HS(CH_2)_3SiCH{=}CH_2(OC_2H_5)_2$ ; $HS(CH_2)_3SiC_6H_5(OCH_3)_2$ ;
$HSCH_2CH(CH_3)CH_2Si(OC_2H_5)_3$.

Ces mercaptosilanes peuvent être préparés par décomposition des sels d'isothiouronium de formule :

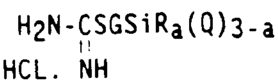

à l'aide d'un agent alcalin tel que l'ammoniac (brevet américain US-3 314 982) Ils peuvent en outre être achetés sur le marché des silicones.

Généralement dans les compositions selon la présente invention on utilise en poids, pour 100 parties d'huile a), 5 à 30 parties de silane de formule Z - G - $Si(R_a)Q_{3-a}$.

Les catalyseurs d) utilisés dans les compositions selon la présente invention peuvent être choisis parmi les titanates et polytitanates d'alcoyles et les sels de diorganoétain d'acides aliphatiques, à raison de 0,05 à 2 parties, de préférence 0,1 à 1 partie pour 100 parties du mélange des huiles A avec les silanes B.

Les titanates d'alcoyles répondent à la formule générale $Ti\{(OCH_2CH_2)_b0R''\}_4$ dans laquelle les symboles R", identiques ou différents, représentent des radicaux alcoyles ayant de 1 à 8 atomes de carbone et le symbole b représente zéro ou 1; quand le symbole b représente zéro, les radicaux alcoyles renferment de 2 à 8 atomes de carbone tels que des radicaux éthyles, n-octyles, n-propyles, isopropyles, n-butyles, isobutyles, sec-butyles, n-pentyles, n-hexyles, éthyl-2 hexyles, n-heptyles, et quand le symbole b représente 1, les radicaux alcoyles sont des radicaux méthyles ou éthyles.

Comme exemples concrets de ces titanates d'alcoyles peuvent être cités les titanates d'éthyle, de n-propyle, d'isopropyle, de n-butyle, d'éthyl-2 hexyle, de β-méthoxyéthyle.

Les polytitanates d'alcoyles proviennent de l'hydrolyse partielle des titanates de formule $Ti(OR'')_4$ ; cette formule correspond à la formule précédente dans laquelle le symbole b représente zéro, le symbole R" représente donc un radical alcoyle ayant de 2 à 8 atomes de carbone.

Ces polytitanates comportent des structures linéaires, constituées chacune d'une succession de motifs de formule $-TiO(OR'')_2-$, et/ou de structures plus complexes commentées dans l'ouvrage "The Organic Chemistry of Titanium" de R. FELD et P.L. COWE, aux pages 25 à 31, édité par BUTTERWORTHS LONDON.

La conformation de ces polytitanates dépend étroitement des conditions opératoires de l'hydrolyse des titanates de formule $Ti(OR'')_4$, du rapport molaire titanates/eau d'hydrolyse et de la nature des radicaux R".

Cependant ces polytitanates doivent être stables au stockage et solubles dans les solvants hydrocarbonés usuels, tels que le toluène, le xylène, le cyclohexane, dans la proportion d'au moins 50 parties pour 100 parties de solvants.

Les sels de diorganoétains d'acides aliphatiques répondent à la formule $(R'''COO)_2SnT_2$ dans laquelle les R"', identiques ou différents, représentent des radicaux hydrocarbonés aliphatiques ayant de 1 à 25 atomes de carbone ; les symboles T, identiques ou différents, représentent des radicaux alcoyles ayant de 1 à 10 atomes de carbone.

Les radicaux hydrocarbonés aliphatiques, représentés par les symboles R"', englobent les radicaux alcoyles et alcényles linéaires ou ramifiés. Comme exemples concrets de tels radicaux alcoyles peuvent être cités

les radicaux méthyles, éthyles, n-propyles, isopropyles, n-butyles, n-hexyles, éthyl-2 hexyles, n-octyles, n-décyles, n-dodécyles, n-tétradécyles, n-pentadécyles, n-hexadécyles, n-octadécyles, n-eicosyles, n-docosyles, n-pentacosyles.

Comme exemples concrets de tels radicaux alcényles peuvent être cités les radicaux répondant aux formules :

$CH_3CH = CH\text{-}CH_2\text{-}$ ;
$CH_3CH = CH\text{-}(\text{-}CH_2)_3\text{-}$ ;
$CH_3\text{-}CH = CH(CH_2)_5\text{-}$ ;
$CH_3(CH_2)_4CH = CH(CH_2)_5\text{-}$ ;
$CH_3(CH_2)_7CH = CH(CH_2)_8\text{-}$ ;
$CH_3(CH_2)_4CH = CH\text{-}CH_2\text{-}CH = CH(CH_2)_8\text{-}$ ;
$CH_3(CH_2)_4\text{-}(CH = CH\text{-}CH_2)_4\text{-}(CH_2)_3\text{-}$.

Par ailleurs, comme exemples concrets de radicaux alcoyles ayant de 1 à 10 atomes de carbone, représentés par les symboles T, peuvent être cités les radicaux méthyles, éthyles, isopropyles, n-propyles, n-butyles, isobutyles, n-pentyles, n-hexyles, n-octyles, n-décyles.

Les sels de diorganoétains d'acides aliphatiques peuvent être des produits purs ou des mélanges; ces derniers sont préparés par exemple, par réaction de mélanges d'acides carboxyliques (provenant de glycérides naturels tels que les huiles de coprah, de palme) sur des oxydes de diorganoétain.

A titre illustratif de ces sels d'organoétains peuvent être mentionnés ceux répondant aux formules :

$(CH_3\text{-}COO)_2Sn(n\text{-}C_4H_9)_2$ ;
$\{CH_3(CH_2)_{10}COO\}_2Sn(n\text{-}C_4H_9)_2$ ;
$\{CH_3(CH_2)_{10}COO\}_2Sn(CH_3)_2$ ;
$\{CH_3(CH_2)_3CH(C_2H_5)COO\}_2Sn(CH_3)_2$ ;
$\{CH_3(CH_2)_3CH(C_2H_5)COO\}_2Sn(n\text{-}C_4H_9)_2$ ;
$\{CH_3(CH_2)_{12}COO\}_2Sn(C_2H_5)_2$ ;
$\{CH_3(CH_2)_{14}COO\}_2Sn(C_2H_5)_2$ ;
$\{CH_3(CH_2)_7 = CH(CH_2)_8\}_2Sn(n\text{-}C_4H_9)_2$.

Les catalyseurs préférés utilisés dans les compositions selon la présente invention sont choisis parmi la lithine et les hydroxylamines N subsituées, de préférence N-alcoyl substituées comme par exemple la diéthylhydroxylamine.

Les quantités de catalyseur utilisées correspondent, en poids, à 0,005 à 2 parties pour 100 parties d'huile a) polydiorganosiloxane $\alpha,\omega$-dihydroxylée.

Les compositions selon la présente invention sont préparées en mélangeant les huiles a), les résines b), le silane c) et le catalyseur d) selon les proportions indiquées ci-avant, le rapport molaire de la somme des radicaux hydroxyles de a) et b) divisée par les radicaux Q du silane c) étant compris entre 0,1 et 0,95, de préférence entre 0,2 et 0,85. La température à laquelle la réaction a lieu est comprise entre 5 et 180 °C, de préférence entre 15 et 150 °C, le temps de réaction étant généralement d'autant plus long que la température de réaction est plus basse.

Avantageusement le mélange obtenu après réaction est dévolatilisé sous vide (par exemple entre 1,33 et 13,3 KPa en pression absolue) et filtré.

Les compositions selon la présente invention sont durcies sous l'action de la lumière ultraviolette et il est avantageux qu'elles comprennent une quantité efficace d'un (ou plusieurs) photoinitiateur(s), également appelé parfois photosensibilisateur(s). Ces matières sont bien connues dans l'art et comprennent par exemple: l'acétophénone, la propiophénone, la benzophénone, la xanthone, la fluorénone, le benzaldéhyde, l'anthraquinone, la triphénylamine, le carbazole, la 3-méthylacétophénone, la 4-méthylacétophénone, la 3-pentylacétophénone, la 4-méthoxyacétophénone, la 3-bromoacétophénone, la 4-allylacétophénone, le p-diacétylbenzène, la 3-méthoxybenzophénone, la 4-methylbenzophénone, la 4-chlorobenzophénone, la 4,4'-diméthoxybenzophénone, la 4-chloro-4'-benzylbenzophénone, la 3-chloroxanthone, la 3,9-dichloroxanthone, la 3-chloro-8-nonylxanthone, l'hydroxy-2 méthyl-2 phényl-1 propanone, l'hydroxy-1cyclohexylphénylcétone, etc.... La quantité de cette matière (photoiniateur) doit être seulement suffisante pour photosensibiliser le système et, d'ordinaire, elle sera comprise entre 0,01 et 10 pour cent en poids, de préférence entre 0,3 et 8 pour cent en poids, par rapport au polyorganosiloxane comprenant des motifs de formule (1).

Les compositions selon la présente invention peuvent éventuellement comprendre des charges, telles que par exemple de la silice, des pigments ou colorants, en quantité telle qu'elles n'empêchent pas le durcissement de la composition par le rayonnement utilisé.

Les compositions selon la présente invention sont liquides et ont une viscosité comprise entre 50 et 30 000 mPa.s à 25 °C, le plus souvent entre 150 et 15 000 mPa.s. Elles sont stables au stockage en récipients fermés opaques.

Du fait de leur procédé de préparation les compositions précédemment décrites renferment, liés aux atomes de silicium :

- soit des radicaux fonctionnels CHX = C(R') - COO - G, en provenance des silanes de formule F (c'est-à-dire de formule CHX = C(R')COO - G - $Si(R_a)Q_{3-a}$) ayant réagi avec les groupements hydroxyles des huiles a) et des résines b),
- soit des radicaux HS - G -, en provenance des silanes de formule $F_2$ (c'est-à-dire de formule HS - G - $Si(R_a)Q_{3-a}$) ayant réagi avec les groupements hydroxyles des huiles a) et des resines b).

Pour la poursuite de la description :

- les compositions contenant uniquement des groupements fonctionnels CHX = C(R') - COO - G -, sont appelées composition $E_1$,
- les compositions contenant uniquement des groupements fonctionnels HS - G - sont appelées compositions $E_2$.

Les compositions selon la présente invention se rapportent également à des compositions comprenant chacune à la fois des groupements CHX = C(R')COO - G - et des groupements HS - G -, le rapport molaire des groupements CHX = C(R') - COO - G/HS - G - étant compris entre 0,05 et 20, ces compositions étant obtenues :

1. - soit par mélange des compositions $E_1$ avec des compositions $E_2$,
2. - soit à partir de compositions $E_1$ auxquelles on ajoute du silane $F_2$,
3. - soit à partir de compositions $E_2$ auxquelles on ajoute du silane $F_1$.

Les exemples ci-après montrent que les compositions selon la présente invention, contenant une résine hydroxylée, ont de meilleures propriétés mécaniques et réticulent plus rapidement vis-à-vis de compostions ne contenant pas de résine hydroxylée, toutes les parties étant exprimées en poids.

- EXEMPLE 1 :

On charge, sous agitation, dans un réacteur équipé d'un agitateur, d'une gaine thermométrique et d'un col de cygne surmonté d'un analyseur :

a) - 100 parties d'une huile $\alpha,\omega$-dihydroxypolydiméthylsiloxane, de viscosité égale à 100 mPa.s à 25°C et dont la teneur pondérale en groupements hydroxyles est de 0,75%, cette huile étant appelée par la suite huile 48V100.

b) - 20 parties d'une résine silicone liquide, dont la viscosité est de 6 800 mPa.s à 25°C, dont la teneur pondérale en groupements hydroxyles est de 2,8%, cette résine étant constituée de motifs T ($CH_3$-$SiO_{1,5}$) et D $(CH_3)_2$-SiO, le rapport des motifs T/motifs D étant de 2,3, le rapport $CH_3$/Si étant de 1,3, cette résine sera appelée par la suite résine 42.

c) - 12 parties de silane de formule $CH_2 = C(CH_3)COO(CH_2)_3Si(OCH_3)_3$, appelé par la suite silane A174.

d) - 0,3 partie de diéthylhydroxylamine, appelée par la suite DEHA.

Le rapport molaire de la somme des radicaux OH de l'huile a) et de la résine b)/radicaux -$OCH_3$ du silane est de 0,55, ce rapport étant appelé par la suite rapport OH/OR.

Le réacteur est chauffé progressivement jusqu'à 120 °C et cette température est maintenue pendant une heure, puis on met la masse réactionnelle sous un vide de 4 KPa (pression absolue) pendant 30 minutes à 120 °C. On refroidit à 25 °C et on filtre la masse réactionnelle sur filtre GAUTIER F60.

Le liquide obtenu est limpide et a une viscosité de 120 mPa.s à 25 °C, la viscosité (ainsi que celle des exemples suivants) étant mesurée au viscosimètre BOHLIN, mobile n° 4.

- EXEMPLE 1C :

On effectue le même essai que celui de l'exemple 1, avec les mêmes réactifs, mais en n'utilisant pas de résine b) et en utilisant seulement 8,5 parties de silane c) pour conserver le même rapport molaire OH/OR de 0,55.

On charge ainsi dans le réacteur :

a) - 100 parties d'huile 48V100,

b) - 8,5 parties de silane A174,

c) - 0,3 partie de DEHA.

Après réaction, dévolatilisation et filtration, on obtient un produit limpide ayant une viscosité à 25 °C de 1 100 mPa.s.

- EXEMPLE 2 :

On opère dans les mêmes conditions qu'à l'exemple 1, en introduisant :
- 100 parties d'huile 48V100,
- 10 parties de résine 42,
- 10,2 parties de silane A174,
- 0,3 partie de DEHA.

Le rapport molaire OH/OR est de 0,55.

Le produit obtenu après filtration est un liquide limpide ayant une viscosité à 25 °C égale à 1 600 mPa.s.

- EXEMPLE 3 :

On opère dans les mêmes conditions qu'à l'exemple 1 en introduisant :
- 100 parties d'huile 48V100,
- 10 parties d'huile 48V70 000, c'est-à-dire d'une huile α,ω-dihydroxypolydimethylsiloxane dont la viscosité à 25 °C est de 70 000 mPa.s et dont la teneur pondérale en groupements hydroxyle est de 0,06%,
- 20 parties de résine 42,
- 12 parties de silane A174,
- 0,3 partie de DEHA.

Le rapport molaire OH/OR est de 0,55.

Le produit obtenu après dévolatilisation et filtration est un produit limpide ayant une viscosité à 25 °C égale à 3 500 mPa.s.

- EXEMPLE 3C :

On opère selon l'exemple 3, mais en ne mettant pas de résine 42 et en ajustant la quantité de silane A174 pour que le rapport molaire OH/OR soit égal à 0,55.

On charge donc :
- 100 parties d'huile 48V100,
- 10 parties d'huile 48V70 000,
- 8,5 parties de silane A174,
- 0,3 partie de DEHA.

Le produit obtenu après réaction, dévolatilisation et filtration est un liquide limpide dont la viscosité est de 1 400 mPa.s à 25 °C.

- EXEMPLE 4 :

On charge dans le réacteur :
- 100 parties d'huile 48V100,
- 30 parties d'huile 48V70 000,
- 10 parties de résine 42,
- 10,2 parties de silane A174,
- 100 parties par million (ppm) de lithine, vis-à-vis de l'huile 48V100.

Le rapport OH/OR est de 0,55.

La reaction a lieu à 25 °C pendant 5 heures. Après neutralisation de la lithine par de l'acide phosphorique, dévolatilisation et filtration on obtient un produit limpide qui présente une viscosité de 5 700 mPa.s à 25 °C.

- EXEMPLE 5 :

On opère de la même façon qu'à l'exemple 4, à la seule différence que l'on remplace l'huile 48V70 000 par une huile 48V3 500, c'est-à-dire une huile α,ω-dihydroxypolydiméthylsiloxane, dont la viscosité est de 3 500 mPa.s à 25 °C et dont la teneur pondérale en groupements hydroxyle est de 0,11%.

On charge dans le réacteur :
- 100 parties d'huile 48V100,
- 30 parties d'huile 48V3 500,
- 10,2 parties de silane A174,
- 10 parties de résine 42,
- 100 ppm de lithine.

Après réaction, neutralisation de la lithine, dévolatilisation et filtration, le produit obtenu est limpide et a une viscosité de 2 700 mPa.s.

- EXEMPLE 6 :

On opère de la même façon qu'à l'exemple 5, à la seule différence que l'on charge 60 parties d'huile 48V3 500 au lieu de 30 parties. Le rapport OH/OR est de 0,58.

Le produit obtenu après réaction, neutralisation de la lithine, dévolatilisation et filtration est un liquide limpide ayant une viscosité de 3 800 mPa.s à 25 °C.

- EXEMPLE 7 : Etude de la réactivité des différentes compositions :

Le test de réactivité utilisé consiste à mesurer l'épaisseur du revêtement silicone obtenu après durcissement sous U.V. de la composition silicone préparée aux exemples 1 à 6 à laquelle on a ajouté au préalable un photoinitiateur. La durée d'irradiation U.V. du revêtement est dans tous les cas égale à 0,5 seconde. L'irradiation U.V. est produite par une lampe à mercure de technologie FUSION SYSTEM ayant une puissance de 120 W/cm.

A 100 parties de produit préparé aux exemples 1 à 6 on ajoute donc 3 parties de photoinitiateur consistant en hydroxy-2 méthyl-2 phényl-1 propanone vendu sous la marque DAROCUR 1173 par la Société MERK.

Les résultats obtenus figurent dans le tableau 1.

- EXEMPLE 8 : Evaluation des propriétés mécaniques des élastomères obtenus :

Les propriétés mécaniques (essentiellement l'allongement à la rupture, le module de YOUNG et la dureté SHORE 00) ont été mesurées sur les élastomères obtenus à partir des compositions selon les exemples 1 à 6 auxquelles on été ajoutées (pour 100 parties de la composition) 3 parties d'hydroxy-2 méthyl-2 phényl-1 propanone et après exposition aux U.V. de ces compositions.

L'allongement à la rupture (AR) est mesuré avec un dynamomètre de la Société INSTRON sur des éprouvettes de type H3 à une vitesse de traction de 10 mm/mn (millimètres par minute).

Le module de YOUNG (MY) est calculé à 2,5% d'allongement et exprime en MPa (mégapascals).

La dureté SHORE 00 est mesurée avec un appareil ZWICK.

Les résultats obtenus (valeur moyenne obtenue sur 10 mesures) sont rassemblés dans le tableau 1 ci-dessous.

TABLEAU 1

| Composition préparée avec le produit selon | Viscosité à 25 °C en mPa.s | | Réactivité U.V. (épaisseur du revêtement en mm) | Propriétés mécaniques | | |
|---|---|---|---|---|---|---|
| | A | B | | AR (%) | MY en MPa. | Dureté SHORE 00 |
| Exemple 1 | 1 200 | 1 800 | 3,8 | 35 | 2 | 60 |
| Exemple 1C | 1 100 | 1 500 | 0,8 | 30 | 0,5 | 45 |
| Exemple 2 | 1 600 | 2 300 | 3,0 | 40 | 0,7 | - |
| Exemple 3 | 3 500 | 6 000 | 2,5 | 46 | 0,5 | 40 |
| Exemple 3C | 1 400 | 2 000 | 0,4 | 50 | 0,2 | 30 |
| Exemple 4 | 3 700 | 10 000 | 8 | - | - | 42 |
| Exemple 5 | 2 700 | 3 200 | 3,9 | - | - | 18 |
| Exemple 6 | 3 800 | 4 500 | 4,2 | - | - | 18 |
| Exemple 11 | 1 600 | 2 300 | 3,5 | 60 | 0,9 | - |
| Exemple 11C | 1 300 | 2 000 | 2,1 | 40 | 0,8 | - |
| Exemple 13 | 2 800 | 3 900 | 3,1 | 60 | 1,0 | - |
| Exemple 14 | 5 700 | 7 600 | 2,2 | 35 | 6,5 | 58(*) |

A : les compositions étant préparées et testées avec les produits (selon les exemples) dès leur obtention.

B : les compositions étant testées 30 jours après leur préparation.

(*) : dureté Shore A

- EXEMPLE 9 :

Utilisation d'une composition selon la présente invention, utilisant la masse réactionnelle obtenue à l'exemple 1, en tant que bain de traitement pour l'obtention d'élastomère silicone en couche mince sur papier, après exposition de la composition déposée au rayonnement ultraviolet.

Une composition selon la présente invention est préparée en ajoutant, à 100 parties en poids de la composition polyorganosiloxane obtenue à l'exemple 1, 5 parties d'une photoinitiateur constitué d'un mélange de benzophénone et d'hydroxy-1 cyclohexylphénylcétone vendu par la Société CIBA-GEIGY sous la marque IRGACURE 500, et en agitant vigoureusement à température ambiante pendant 10 minutes.

On dépose la composition selon la présente invention ainsi obtenue, sans solvant, sur du papier "glassine" (référence AVI 00 de la Société KAMERER) au moyen d'une barre de MAYER n° 0. Le dépôt correspond à 2,5 g de composition par $m^2$ de papier.

On fait alors passer ce papier enduit sous une lampe U.V. de technologie FUSION SYSTEM ayant une puissance de 120 W/cm. Par passage sous la lampe U.V., à l'air ambiant, la couche silicone est durcie et l'on mesure les propriétés anti-adhérentes du revêtement silicone obtenu.

Pour cela on met au contact de la couche de silicone durcie ainsi obtenue, à 20 °C pendant 20 heures, un ruban adhésif (TESA 4651) et à 70 °C pendant 20 heures un ruban adhésif (TESA 4970).

On mesure la force minimale pour détacher le ruban adhésif considéré (TESA) de la couche durcie sur le papier glassine, suivant la norme européenne FTM n° 3. Cette force est exprimée en Newton par m (N/m).

D'autre part la mesure de l'adhésion subséquente (CA) représente le niveau de polymérisation du silicone (CA = 100%, représente une bonne polymérisation). Cette mesure est effectuée selon la norme européenne FTM N° 11 (FINAT TEST METHOD).

Les résultats obtenus figurent dans le tableau 2.

- EXEMPLE 9C :

On opère de la même façon qu'à l'exemple 9, à la seule différence qu'on utilise la masse réactionnelle obtenue à l'exemple 1C, c'est-à-dire une masse réactionnelle ne comprenant pas de résine hydroxylée.

Les résultats obtenus figurent dans le tableau 2 ci-dessous.

TABLEAU 2

| Composition avec masse selon | Temps de polymérisation (seconde) | Anti-adhérence | | |
|---|---|---|---|---|
| | | à 20 °C en g/cm | à 70 °C en N/m | CA |
| Exemple 1 | 0,15 | 5 | 7 | 100 |
| Exemple 1C | 0,5 | 5 | 20 | 100 |

- EXEMPLE 10 :

On opère dans les mêmes conditions qu'à l'exemple 1, à la seule différence que le silane utilisé est le γ-mercaptopropyltriméthoxysilane, appelé par la suite silane 137. On introduit ainsi dans le réacteur :

a) - 100 parties d'huile 48V100,

b) - 20 parties de résine 42,

c) - 10 parties de silane 137,

d) - 100 ppm (vis-à-vis de l'huile a) de lithine.

Après réaction pendant 3 heures à 28 °C, neutralisation à l'acide phosphorique et filtration, le produit obtenu est limpide et a une viscosité de 1 800 mPa.s à 25 °C.

- EXEMPLE 11 :

On évalue la réactivité sous U.V. d'une composition silicone obtenue à partir de :

- 100 parties de produit préparé selon l'exemple 10,
- 150 parties de produit préparé selon l'exemple 3C,
- 7,5 parties de photoinitiateur DAROCUR 1173 vendu par la Société MERK et décrit à l'exemple 7.

Le rapport molaire des groupements méthacrylates sur les groupements mercapto est de 1,2.

Ce système est réticulé sous U.V., pendant 0,5 seconde, avec une lampe FUSION SYSTEM de 120 W/cm. L'évaluation des propriétés est indiquée dans le tableau 1.

- EXEMPLE 11C :

Cet essai est fait dans les mêmes conditions que celles de l'exemple 11, mais on n'utilise pas de résine hydroxylée 42 pour la préparation (selon l'exemple 10) du premier produit.

On charge dans le réacteur :

a) - 100 parties d'huile 48V100,
b) - 10 parties de silane 137,
c) - 100 ppm (par rapport à l'huile a) de lithine.

Le produit obtenu a une viscosité de 1 000 mPa.s à 25 °C.

On mélange le produit obtenu ci-avant avec le produit obtenu à l'exemple 3C, ces produits étant utilisés en proportions telles que le rapport molaire des groupements méthacrylates sur les groupements mercapto soit égal à 1,2. On ajoute 7,5 parties de photoinitiateur DAROCUR 1173 pour 250 parties de mélange.

La réactivité du mélange et les propriétes mécaniques du matériau obtenu (élastomère) après réticulation pendant 0,5 seconde sous une lampe U.V. de type FUSI0N SYSTEM de 120 W/cm sont consignées dans le tableau 1.

- EXEMPLE 12 :

On opère dans les mêmes conditions qu'à l'exemple 10, sans utiliser de résine hydroxylée et en utilisant de la diéthylhydroxylamine comme catalyseur. Ainsi on introduit dans le réacteur :

- 100 parties d'huile 48V100,
- 10 parties de silane 137,
- 0,2 partie de diéthylhydroxylamine.

Après réaction pendant 1 heure à 120 °C, on refroidit à 25 °C et on dévolatilise sous un vide absolu de 4 KPa, pendant 20 minutes à 110 °C.

On refroidit la masse à 25 °C et on filtre. Le produit obtenu est limpide et a une viscosité de 1 000 mPa.s à 25 °C.

- EXEMPLE 13 :

On prépare une composition silicone à partir de la formulation suivante :

- 100 parties de produit préparé selon l'exemple 12,
- 250 parties de produit préparé selon l'exemple 6,
- 10 parties de photoinitiateur DAROCUR 1173.

le rapport molaire des groupements méthacrylates sur les groupements mercapto étant égal à 1,2.

Cette composition est réticulée sous U.V. pendant 0,5 seconde avec une lampe FUSION de 120 W/cm et on mesure l'épaisseur du revêtement obtenu et les propriétés mécaniques de cet élastomère (voir le tableau 1).

- EXEMPLE 14 :

On effectue la même réaction qu'à l'exemple 1, à la seule différence que l'on remplace la résine 42 par une résine MQ en solution dans une huile $\alpha,\omega$-dihydroxylée polydiméthylsiloxane ayant une viscosité à 25 °C égale à 100 mPa.s.

Cette résine MQ est constituée de motifs M = $(CH_3)_3SiO_{0,5}$ et de motifs Q = $SiO_2$ répartis suivant un rapport molaire M/Q = 0,6 et elle renferme 2,8% de radicaux hydroxyles. Sa masse moléculaire en nombre (Mn) est de 5 500, et est déterminée par osmométrie.

On charge ainsi dans le réacteur :

- 104 parties de solution de résine MQ dans l'huile définie ci-avant, le rapport pondéral résine/huile étant de 40/60,
- 26 parties d'huile 48V100,

- 13 parties de silane A174,
- 0,33 partie de lithine en solution à 5,7% dans du méthanol.

Après réaction pendant deux heures à 80-85 °C, refroidissement à 25 °C, dévolatilisation sous vide et filtration on recueille un produit limpide ayant une viscosité à 25 °C de 5 700 mPa.s.

On évalue la réactivité de ce produit sous U.V. et on mesure les propriétés mécaniques du matériau obtenu, dans les mêmes conditions qu'aux exemples précédents, après réticulation sous U.V.

Les résultats sont consignés dans le tableau 1.

## Revendications

1. Compositions polyorganosiloxanes photopolymérisables comprenant :
   A. - le produit de la réaction entre :
      a) - une huile polydiorganosiloxane α,ω-dihydroxylée,
      b) - une résine polysiloxane hydroxylée,
      c) - au moins un silane de formule $Z\text{-}G\text{-}Si(R_a)Q_{3-a}$ dans laquelle :
         - le symbole Z représente le radical CHX = C(R')-COO-, ou le radical -SH,
         - les symboles R, identiques ou différents, représentent des radicaux alcoyles en $C_1$ à $C_4$, alcényles en $C_2$ à $C_4$, aryles,
         - le symbole R' représente un atome d'hydrogène ou un radical méthyle,
         - le symbole X représente un atome d'hydrogène ou un radical phényle, éventuellement halogéné,
         - le symbole G représente un radical alcoylène, linéaire ou ramifié, ayant de 1 à 8 atomes de carbone,
         - les symboles Q, identiques ou différents, représentent des radicaux alcoxy en $C_1$ à $C_8$, des radicaux β-méthoxyéthoxyles, deux symboles Q en se réunissant représentant un radical de formule :

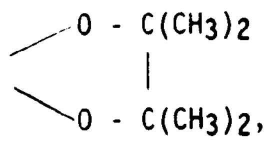

         - a représente 0, 1 ou 2

      en présence
      d) - d'au moins un catalyseur de condensation, la réaction ayant lieu à une température comprise entre 5 et 180 °C et le rapport molaire de la somme des radicaux hydroxyles de a) et b) divisée par les radicaux Q du silane c) étant compris entre 0,1 et 0,95.
   B. - au moins un photo-initiateur.

2. Compositions selon la revendication 1, caractérisées en ce que dans l'huile polydiorganosiloxane α,ω-dihydroxylée a) les radicaux organiques, liés aux atomes de silicium, sont choisis parmi les radicaux méthyles, éthyles, n-propyles, vinyles, phényles, trifluoropropyles, au moins 70% de ces radicaux étant des radicaux méthyles, au plus 3% étant des radicaux vinyles.

3. Compositions selon les revendications 1 ou 2, caractérisées en ce que la résine b) est liquide et comprend, en poids, de 0,1 à 6% de groupements hydroxyles.

4. Compositions selon l'une quelconque des revendications précédentes, caractérisées en ce que :
   - l'huile α,ω-dihydroxypolydiorganosiloxane a) a une viscosité comprise entre 50 et 100 000 mPa.s à 25 °C,
   - la résine b) a une viscosité comprise entre 50 et 30 000 mPa.s à 25 °C.

5. Compositions selon l'une quelconque des revendications précédentes, caractérisées en ce que la résine b) comprend des motifs $R^2SiO_{1,5}$ (T) et/ou $SiO_2$ (Q), avec des motifs $R^2{}_3SiO_{0,5}$ (M) et/ou des motifs $R^2{}_2SiO$ (D), le symbole $R^2$ représentant des radicaux alcoyles en $C_1$ à $C_6$ éventuellement halogénés, des radicaux aryles, des radicaux alcényles en $C_2$ à $C_4$.

6. Compositions selon l'une quelconque des revendications précédentes, caractérisées en ce que le catalyseur utilisé est choisi parmi la diéthylhydroxylamine et la lithine.

7. Compositions selon l'une quelconque des revendications précédentes, caractérisées en ce qu'elles sont obtenues à partir de, en poids :
   a) - 100 parties d'une huile polydiorganosiloxane $\alpha,\omega$-dihydroxylée,
   b) - 5 à 50 parties d'une résine polysiloxane hydroxylée,
   c) - 5 à 30 parties de silane de formule Z - G - $Si(R_a)Q_{3-a}$,
   d) - 0,005 à 2 parties de catalyseur,
   e) - 0,01 à 10 parties de photoinitiateur.

8. Compositions selon l'une quelconque des revendications précédentes, caractérisées en ce qu'elles contiennent un mélange de radicaux CHX = C(R')COO - et -SH, le rapport molaire des radicaux CHX = C(R')COO -/HS - étant compris entre 0,05 et 20, ces compositions étant obtenues :
   - soit par mélange des compositions selon les revendications précédentes, dans lesquelles le symbole Z représente le radical HS-, avec un silane de formule CHX = C(R')COO - G - $Si(R_a)Q_{3-a}$,
   - soit par mélange des compositions selon les revendications précédentes dans lesquelles le symbole Z représente le radical CHX = C(R') - COO -, avec un silane de formule HS - G - $Si(R_a)Q_{3-a}$,
   - soit par mélange des compositions selon les revendications précédentes dans lesquelles le symbole Z du silane utilisé représente le radical CHX = CH(R')COO -, avec des compositions selon les revendications précédentes dans lesquelles le symbole Z du silane utilisé représente le radical HS-.

9. Utilisation des compositions selon l'une quelconque des revendications précédentes dans le domaine de l'antiadhérence papier ou des fibres optiques.

## Patentansprüche

1. Photopolymerisierbare Polyorganosiloxanzusammensetzungen, enthaltend:
   A. - das Reaktionsprodukt zwischen:
      a) - einem $\alpha,\omega$-dihydroxylierten Polydiorganosiloxanöl,
      b) - einem hydroxylierten Polysiloxanharz,
      c) - zumindest einem Silan der Formel Z-G-$Si(R_a)Q_{3-a}$, worin:
         - das Symbol Z für den Rest CHX = C(R')-COO- oder den Rest -SH steht,
         - die Symbole R, identisch oder verschieden, $C_1$-$C_4$-Alkylreste, $C_2$-$C_4$-Alkenylreste, Arylreste bedeuten,
         - das Symbol R' ein Wasserstoffatom oder einen Methylrest darstellt,
         - das Symbol X ein Wasserstoffatom oder einen gegebenenfalls halogenierten Phenylrest bedeutet,
         - das Symbol G für einen linearen oder verzweigten Alkylenrest mit 1 bis 8 Kohlenstoffatomen steht,
         - die Symbole Q, identisch oder verschieden, $C_1$-$C_8$-Alkoxyreste oder $\beta$-Methoxyethoxyreste bedeuten, wobei zwei Symbole Q miteinander vereint für einen Rest der Formel

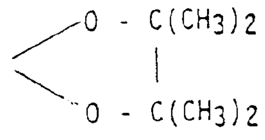

stehen können,
         - a 0, 1 oder 2 bedeutet,

      in Gegenwart von
      d) zumindest einem Kondensationskatalysator, wobei die Reaktion bei einer Temperatur zwischen 5 und 180°C stattfindet, und das Molverhältnis der Summe der Hydroxylreste von a) und b), geteilt durch die Reste Q des Silans c), zwischen 0,1 und 0,95 liegt;
   B. - zumindest einen Photoinitiator.

2. Zusammensetzungen gemäß Anspruch 1, dadurch gekennzeichnet, daß in dem $\alpha,\omega$-dihydroxylierten Polydiorganosiloxanöl a) die an Siliciumatome gebundenen organischen Reste unter den Methyl-, Ethyl-, n-Propyl-, Vinyl-, Phenyl-, Trifluorpropylresten ausgewählt sind, wobei zumindest 70 % dieser Reste Methylreste und höchstens 3 % Vinylreste sind.

3. Zusammensetzungen gemäß Anspruch 1 oder 2, dadurch gekennzeichnet, daß das Harz b) flüssig ist und, auf das Gewicht bezogen, 0,1 bis 6 % Hydroxylgruppen aufweist.

4. Zusammensetzungen gemäß einem der vorhergehenden Ansprüche, dadurch gekennzeichnet, daß:
   - das $\alpha,\omega$-Dihydroxypolydiorganosiloxanol a) eine Viskosität zwischen 50 und 100 000 mPa.s bei 25°C besitzt,
   - das Harz b) eine Viskosität zwischen 50 und 30 000 mPa.s bei 25°C besitzt.

5. Zusammensetzungen gemäß einem der vorhergehenden Ansprüche, dadurch gekennzeichnet, daß das Harz b) Gruppierungen $R^2SiO_{1,5}$ (T) und/oder $SiO_2$ (Q) mit Gruppierungen $R^2{}_3SiO_{0,5}$ (M) und/oder Gruppierungen $R^2{}_2SiO$ (D) umfaßt, wobei das Symbol $R^2$ gegebenenfalls halogenierte $C_1$-$C_6$-Alkylreste, Arylreste, $C_2$-$C_4$-Alkenylreste wiedergibt.

6. Zusammensetzungen gemäß einem der vorhergehenden Ansprüche, dadurch gekennzeichnet, daß der verwendete Katalysator unter Diethylhydroxylamin und Lithiumhydroxid ausgewählt wird.

7. Zusammensetzungen gemäß einem der vorhergehenden Ansprüche, dadurch gekennzeichnet, daß sie erhalten werden, ausgehend von, auf das Gewicht bezogen:
   a) - 100 Teilen eines $\alpha,\omega$-dihydroxylierten Polydiorganosiloxanöls,
   b) - 5 bis 50 Teilen eines hydroxylierten Polysiloxanharzes,
   c) - 5 bis 30 Teilen Silan der Formel Z-G-$Si(R_a)Q_{3-a}$,
   d) - 0,005 bis 2 Teilen Katalysator,
   e) - 0,01 bis 10 Teilen Photoinitiator.

8. Zusammensetzungen gemäß einem der vorhergehenden Ansprüche, dadurch gekennzeichnet, daß sie eine Mischung der Reste CHX = C(R')COO- und -SH enthalten, wobei das Molverhältnis der Reste CHX = C(R')COO-/HS- zwischen 0,05 und 20 liegt, und wobei diese Zusammensetzungen erhalten werden:
   - entweder durch Mischen der Zusammensetzungen gemäß den vorhergehenden Ansprüchen, worin das Symbol Z den Rest HS- bedeutet, mit einem Silan der Formel
     $$CHX = C(R')COO\text{-}G\text{-}Si(R_a)Q_{3-a},$$
   - oder durch Mischen der Zusammensetzungen gemäß den vorhergehenden Ansprüchen, worin das Symbol Z den Rest CHX = CH(R')-COO- bedeutet, mit einem Silan der Formel
     $$HS\text{-}G\text{-}Si(R_a)Q_{3-a},$$
   - oder durch Mischen der Zusammensetzungen gemäß den vorhergehenden Ansprüchen, worin das Symbol Z des verwendeten Silans den Rest CHX = CH(R')COO- bedeutet, mit Zusammensetzungen gemäß den vorhergehenden Ansprüchen, worin das Symbol Z des verwendeten Silans HS-bedeutet.

9. Verwendung der Zusammensetzungen gemäß einem der vorhergehenden Ansprüche in dem Bereich des Antihaftpapiers oder der optischen Fasern.

**Claims**

1. Photopolymerizable polyorganosiloxane compositions comprising:
   A. - the product of the reaction between:
      a) -an $\alpha,\omega$-dihydroxylated polydiorganosiloxane oil,
      b) - a hydroxylated polysiloxane resin, and
      c) - at least one silane of formula Z-G-$Si(R_a)Q_{3-a}$, in which:
         - the symbol Z represents the radical CHX = C(R')-COO- or the radical -SH,
         - the symbols R, which may be identical or different, represent $C_1$ to $C_4$ alkyl radicals, $C_2$ to $C_4$ alkenyl radicals or aryl radicals,
         - the symbol R' represents a hydrogen atom or a methyl radical,
         - the symbol X represents a hydrogen atom or an optionally halogenated phenyl radical,
         - the symbol G represents a straight-chain or branched alkylene radical having from 1 to 8 carbon atoms,

- the symbols Q, which may be identical or different, represent $C_1$ to $C_8$ alkoxy radicals or β-methoxyethoxy radicals, two symbols Q combining representing a radical of formula:

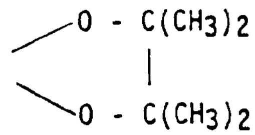

and

- a represents 0, 1 or 2

in the presence

d) - of at least one condensation catalyst, the reaction taking place at a temperature of between 5 and 180°C and the molar ratio of the sum of the hydroxyl radicals of a) and b) divided by the radicals Q of the silane c) being between 0.1 and 0.95, and

B. - at least one photo-initiator.

**2.** Compositions according to Claim 1,
characterized in that in the α,ω-dihydroxylated polydiorganosiloxane oil a) the organic radicals, bonded to the silicon atoms, are chosen from methyl, ethyl, n-propyl, vinyl, phenyl and trifluoropropyl radicals, at least 70 % of these radicals being methyl radicals and at most 3 % being vinyl radicals.

**3.** Compositions according to Claim 1 or 2,
characterized in that the resin b) is liquid and comprises, by weight, from 0.1 to 6 % of hydroxyl groups.

**4.** Compositions according to any one of the preceding claims, characterized in that:

- the α,ω-dihydroxyaolydiorganosiloxane oil a) has a viscosity of between 50 and 100,000 mPa.s at 25°C, and
- the resin b) has a viscosity of between 50 and 30,000 mPa.s at 25°C.

**5.** Compositions according to any one of the preceding claims, characterized in that the resin b) comprises $R^2SiO_{1.5}$ units (T) and/or $SiO_2$ (Q) units, with $R^2{}_3SiO_{0.5}$ (M) units and/or $R^2{}_2SiO$ (D) units, the symbol $R^2$ representing optionally halogenated $C_1$ to $C_6$ alkyl radicals, aryl radicals or $C_2$ to $C_4$ alkenyl radicals.

**6.** Compositions according to any one of the preceding claims, characterized in that the catalyst used is chosen from diethylhydroxylamine and lithium oxide.

**7.** Compositions according to any one of the preceding claims, characterized in that they are obtained from, by weight:

a) - 100 parts of an α,ω-dihydroxylated polydiorganosiloxane oil,
b) - 5 to 50 parts of a hydroxylated polysiloxane resin,
c) - 5 to 30 parts of silane of formula

$$Z - G - Si(R_a)Q_{3-a},$$

d) - 0.005 to 2 parts of catalyst, and
e) - 0.01 to 10 parts of photoinitiator.

**8.** Compositions according to any one of the preceding claims, characterized in that they contain a mixture of CHX = C(R')COO- and -SH radicals, the molar ratio of CHX = C(R')COO-/HS- radicals being between 0.05 and 20, these compositions being obtained:

- either by mixing compositions according to the preceding claims, in which the symbol Z represents the radical HS-, with a silane of formula
$$CHX = C(R')COO - G - si(R_a)Q_{3-a},$$
- or by mixing compositions according to the preceding claims in which the symbol Z represents the radical CHX = C(R') - COO -, with a silane of formula
$$HS - G - Si(R_a)Q_{3-a},$$
- or by mixing compositions according to the preceding claims, in which the symbol Z in the silane used represents the radical CHX = CH(R')COO -, with compositions according to the preceding claims in which the symbol Z in the silane used represents the radical HS-.

9. Use of the compositions according to any one of the preceding claims in the field of anti-adherence of paper or of optical fibres.